Europäisches Patentamt

European Patent Office

Office européen des brevets

(11) Publication number: **0 418 075 B1**

# EUROPEAN PATENT SPECIFICATION

(45) Date of publication of patent specification: **21.06.95**　(51) Int. Cl.⁶: **B01D 53/34**

(21) Application number: **90310016.2**

(22) Date of filing: **13.09.90**

(54) **Process for removing tin compounds from exhaust gases.**

(30) Priority: **13.09.89 US 406482**
**10.09.90 US 578570**

(43) Date of publication of application:
**20.03.91 Bulletin 91/12**

(45) Publication of the grant of the patent:
**21.06.95 Bulletin 95/25**

(84) Designated Contracting States:
**AT BE CH DE DK ES FR GB IT LI LU NL SE**

(56) References cited:
**EP-A- 0 254 697**
**EP-A- 0 278 537**
**WO-A-84/04468**
**DE-A- 3 403 737**
**US-A- 4 009 241**

**DATABASE WPI, no. 77-54551Y, Derwent
Publications Ltd, London, GB;& JP-A-52 023
506 (CHIYODA CHEM. ENG. CO.) 22-02-1977**

(73) Proprietor: **ATOCHEM NORTH AMERICA, INC.
Three Parkway
Philadelphia,
Pennsylvania 19102 (US)**

(72) Inventor: **De Graaf, Aart Pieter
Gravenhof 8
NL-4461 TX Goes (NL)**
Inventor: **Linder, Georg Heinrich
Haydnlaan 10
NL-4384 KV Vlissingen (NL)**
Inventor: **Hoekman, Leendert Cornelis
Kamperfoeliestraat 44
NL-4461 NM Goes (NL)**

(74) Representative: **Stoner, Gerard Patrick et al
MEWBURN ELLIS
York House
23 Kingsway
London WC2B 6HP (GB)**

## Description

This invention relates to the field of removing metal species from vapors. More particularly, the present invention relates to the removal of tin compounds from exhaust vapors discharged during manufacturing processes.

A number of industrial processes release metal vapors into the atmosphere; in order to protect the environment, limits have been established and continue to be revised as to the amount of metal which may be so released. This fact may require modification or even abandonment of inefficient or poorly controllable processes; alternatively, additional process steps to remove metal species from the exhaust gases may be necessary to allow continuation of the processes. Such well-known processes employ methods such as scrubbing the exhaust gases with water, employing filters with absorbing solids, e.g., carbon, incinerating the exhaust gases, and passing the gases through dust filters or electrostatic precipitators.

US-A-4,144,262, US-A-4,130,673 and US-A-4,530,857 discuss the treatment of newly-formed and still-hot glass objects with a vapor of monobutyltin trichloride (MBTC) to form a protecting tin-oxide layer on these objects, and the concomitant removal of MBTC from the exhaust gases of that process. Electrostatic precipitators or other devices are recommended.

To solve the problem of waste-stream removal, another method known in the art is to contact the exhaust gases with an aqueous solution of a base such as sodium hydroxide. It has been found, however, that known exhaust-gas-treatment methods suffer a number of disadvantages; most methods don't attain the required low levels of metal to permit free emission of the cleaned exhaust gases. This is the case, for instance, if an electrostatic precipitator or condenser is used.

Scrubbing with caustic solution generates an aqueous metal oxide, the oxide containing mud which needs to be treated again by filtration or centrifugation, thereby generating a new problem, that of disposal of waste water. This method is also expensive, and requires uneconomical labour input.

US-A-4009241 discloses the use of an acidic aqueous solution containing divalent mercury to remove mercury vapour contaminating a gas.

EP-A-254697 removes mercury vapour using an aqueous acid absorbing medium in which halide (HCl) complexes the mercury.

EP-A-278537 decontaminates a gas stream containing mercury vapour and sulphur dioxide by contacting it with an acidic solution containing chloride and copper (II) ions.

JP-A-52/023506 describes the use of an acidic solution for desulphurising flue gas from a heavy oil burner.

DE-A-3403737 describes using a spray of dilute hydrochloric acid in a tortuous absorption path to scrub off-gases from metal processing.

We now propose a process for treating exhaust gases containing tin compound(s), to remove the tin compound(s), characterised by contacting the exhaust gases with an aqueous acidic liquid absorbing medium having a pH of about 6 or less to absorb tin compound(s) from the exhaust gases until the absorbing medium contains at least about 5wt% tin.

The invention seeks to alleviate at least some of the problems encountered in the prior art by contacting the tin-contaminated vapor with the acidic liquid of pH below 6, preferably below 3, more preferably below 2.5 and most preferably below 2, in such a manner that the tin compound is absorbed. By appropriate selection of this acidity (and, if necessary, temperature and other variables) it may be arranged that substantially no precipitate forms in the absorbing medium. This gives a great advantage in handling. Furthermore, the absorbing liquid medium already contains some of that species which is to be removed from the vapor, or a species substantially similar. We find that this can unexpectedly improve the degree of absorption.

Accordingly in a preferred aspect the process comprises:

(a) contacting the vapor containing the tin compound(s) with an acidic aqueous medium with a pH value below about 6, and preferably below about 2, in order to absorb a substantial amount of the tin compound(s) down to a level in the vapor which allows venting of the vapor into the atmosphere, while keeping the acidic medium essentially free of precipitate, and wherein the acidic medium already contains said minimum level of the tin compound(s) to be absorbed,

(b) optionally circulating the acidic aqueous medium to increase the tin concentration in the solution,

(c) optionally using the tin-containing solution to recover the accumulated tin as tin, tin oxide or organotin compound, and

(d) optionally recycling part or all of this solution into the process which generates the tin-containing vapors to replace at least partly the tin compounds used.

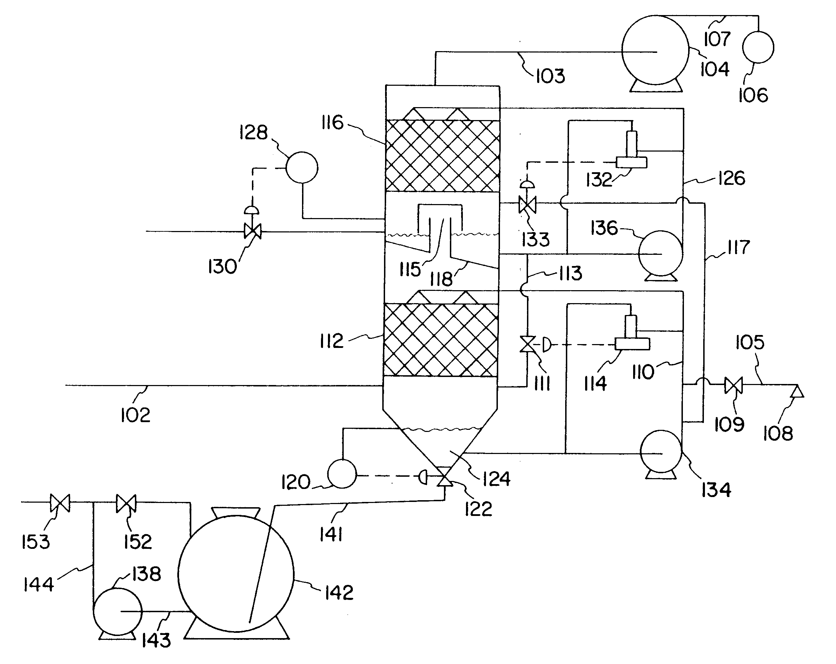

The figure is a partially schematic representation of apparatus useful for carrying out the process.

The present process is for removing tin-containing species from vapors e.g. from the exhaust gases of installations used in the process of coating glass objects with a layer of tin oxide.

The process may enable the relatively simple cleaning of the exhaust gases from the operation of coating glass with tin compounds. It also avoids the generation of solid waste, and prevents the formation of tin-containing waste water in, e.g., a glass plant. We have found it possible to clean exhaust gas to a concentration of less than about 5 milligrams (mg) of tin metal per standard cubic meter (SCM) of gas, as required by, e.g., the German Federal Republic.

It is convenient to recycle the aqueous medium in the process using the tin compound. When this is done with tin, no further processing of the aqueous medium is required by the glass manufacturer, and the process does not yield waste products. Such recycling is economically possible because of the high tin concentration which can be achieved, making it feasible to store and transport the scrubbing liquid resulting from the contact of the acid aqueous media with the vapor. It is also possible to recycle all or part of the scrubbing liquid back into the process which generates the tin-containing vapors, to replace part of the virgin tin compound needed. Since in most cases, total recycling in the latter process will lead to an increasingly high acid content in the scrubbing liquid, it can be economically advantageous to recycle at least part of the scrubbing liquids into the manufacturing process of the tin compound.

A suitable medium with which to start is one which is primarily water, with an acidifier to prevent or reduce the precipitation of solids. Due to the circulation, the concentration of the metallic species can easily be increased to the desired level.

The present process is especially suited for use in an operation wherein tin oxide is coated onto glass or similar substrates, and wherein residual tin is removed from the exhaust gases exiting from the coating facility. Concentration of the tin in the contacting solutions is at least 5% by weight (wt.%) of tin metal while maintaining a pH value below about 6, preferably below about 2.5, and most preferably below about 2. A tin-metal concentration of preferably at least 10 wt %, and most preferably over about 20 wt.%, can be used.

The exhaust vapor can be contacted with the liquid medium in a high-energy scrubber. However, according to a preferred embodiment of this invention, the vapor is contacted with a liquid medium in a low-energy scrubber or in a spraying tower under conditions which prevent the formation of a mist.

It is expedient to maintain the vapors at a temperature above the saturation point for the tin species at all times. This can be done by applying additional heat to prevent local formation of conditions of separation of the vapor having tin-containing species. According to one embodiment, steam is added to the exhaust gases to prevent local cooling of the washing liquor in the scrubber. It is preferred that the vapors be maintained at a temperature above their saturation point for the tin species. In another preferred embodiment, the washing liquid is heated by circulating it through a heat exchanger. The present process is especially suited for use with tin tetrachloride, an alkytin halide or MBTC.

It is known that dilute aqueous solutions of MBTC already have a strong tendency to foam; this interferes with the treatment of vapors in scrubbing systems. Surprisingly, however, it has now been found that the present process can be used with high concentrations of tin in the scrubbing liquid without the formation of significant amounts of foam.

A second device with a more dilute solution of the tin compound in water can be used in a second step further to reduce the tin content of the vapor, if either process economics or consideration for the environment should require the additional treatment. It will be clear that a concentrated solution can be used in the manufacturing process from which the exhaust vapor was originally discharged, or in the process of manufacturing the tin compound. However, it is also possible to transport the concentrated solution to an off-site facility to recover the tin contained. Because of the very low levels of tin found in the vapors which are finally released, the process of this invention is especially useful in geographical areas which are subject to stringent regulations with respect to emissions of materials deleterious to the atmosphere.

The process enables the cleaning of exhaust gases to a tin content below about 5 mg/SCM. These results cannot be obtained by methods known in the art; present methods using condensors, filters or electrostatic precipitators do not lead to exhaust gases with a sufficiently low concentration of metal species. Methods employing alkaline aqueous media can achieve this objective, but are quite cumbersome and labor-intensive.

For example, it is necessary continuously to remove the precipitate formed during the prior-art process of contacting the exhaust gases with an alkaline solution, the operation being difficult to achieve because the precipitates of tin compounds are notoriously difficult to filter. Filtration and centrifugation themselves are alien operations to the industry involved, and the processes generate effluent water of a quality which does not permit disposal in a sewer or other facility, without further treatment of that effluent itself; contacting the exhaust gases only with water which is constantly renewed gives rise to large quantities of waste water, which also need to be treated further.

Surprisingly, and contrary to expectations based on calculations of the vapor pressures of the tin compounds involved, it has been found that it is possible to use a solution containing significant quantities of tin-containing species, and optionally hydrochloric acid or other acids, as a contacting medium to clean exhaust gases. Using suitable apparatus it has unexpectedly been found possible to employ contacting solutions which contain over 5, preferably over 10, and most preferably over 20, wt.%, tin-containing species, calculated as tin metal, while maintaining a pH below about 6 in the process medium.

The contact between the liquid and the vapor phase may be effected by a variety of methods, including both static and active agitation, but is preferably done by active mixing of the two phases. For example, the vapor may simply be bubbled through the aqueous medium stored in a reservoir, or the aqueous medium may be stirred as the vapor enters the atmosphere above the liquid. In one procedure, the vapor is contacted with the liquid medium in a high-energy scrubber.

In a preferred procedure, the liquid medium is contacted with the vapor in a low-energy scrubbing apparatus or in a spraying tower under conditions which favor the saturation of the vapor with tin-containing species. It is possible to avoid the use of a high-energy scrubber and use a simpler and less costly low-energy scrubber if the vapor is prevented from becoming supersaturated with tin-containing species. It has unexpectedly been found that tin-containing species can be removed from vapors with relative ease and below levels predicted from the calculated partial pressures of the compounds involved at their concentration in the wash liquid, if the vapors are maintained at a temperature above their saturation point for the species involved.

If the vapors are permitted to cool below their saturation point, the resulting finely-divided mist or sol of liquid which contains tin compounds is quite difficult to separate from the vapor. In this latter case, more equipment and energy-intensive methods must be employed to separate the mist or sol from the vapor.

It is possible to use an acidic aqueous solution to obtain a relatively high concentration of tin compound in the wash liquor. The degree of acidity of the wash liquor necessary to prevent the formation of precipitate and foaming can be obtained by starting the process with water acidified with a quantity of, e.g. hydrochloric or other suitable inorganic or organic acid.

The aqueous-treatment step may be started with water already containing a purposely added quantity of a tin or organotin halide, such as e.g. MBTC, which contributes the necessary level of acidity. Further in the process, it will rarely be necessary to add additional acid or tin compound if the exhaust vapors contain an acid such as, e.g., hydrogen halide. In this case, the process will automatically maintain the required level of acidity.

The process may be carried out over a range of temperatures; in general, it is advisable to use ambient temperatures for reasons of simplicity and economy. If low-energy scrubbers are employed, means of adding additional heat can be of advantage to prevent local formation of conditions of super-saturation of the vapor with the liquid containing the tin species such as, e.g., tin halides and organometallic halides, and silanes and the like. In addition, steam can be added to the exhaust gases to prevent local cooling of the wash liquor due to excessive evaporation of water under conditions of low ambient humidity.

In case the exhaust gases are very hot, as may be the case in some glass-coating processes, cooling of the circulating liquid or of the exhaust gases may become necessary. Heating or cooling of gases, liquids or the apparatus may be effected by standard engineering methods well known in the art, which methods form no part of this invention as such.

The contact time needed between exhaust gases and wash liquid depends upon the level of tin compound to be found in the final exhaust gas which is discharged into the atmosphere following the treatment by the process of this invention. The process is continued as necessary until effluent criteria are met. It can be beneficial towards this end to employ one relatively large scrubbing column or similar device, or to employ a plurality of smaller devices in series. This latter option also allows further increase in the concentration of tin compounds in the solution discharged from the apparatus for recovery; the wash liquid recirculates in the apparatus until the concentration of the tin moiety in the liquid exceeds the level which enables efficient cleaning of the exhaust gases. This level can vary as a function of the temperature or design parameters of the apparatus, and must be determined for a given set of circumstances.

For the cleaning of exhaust gases from the process of coating of glass with tin oxide using MBTC as a precursor, maximum concentrations over 5 and preferably over 10 wt.% in the wash liquid, calculated as tin metal, can be obtained. In the case of more than one wash device in series, and using the wash liquor of one device to feed the previous one, the concentration of tin metal in the first device may reach 20% or more. The performance of the apparatus can be easily monitored by measuring a physical parameter such as density to control the concentration of the wash liquid. In the event that more than one device is used in series, a predetermined level can be maintained by replacing part of the liquid by water or wash liquid from the downstream wash device.

In one preferred embodiment of the invention, the apparatus to remove metallic species from process-stream vapors is connected to receive the exhaust vapors from a facility for coating glass objects with tin oxide. A variety of tin compounds are known to be useful for such a purpose; such compounds include, but are not limited to, e.g., MBTC, tin tetrachloride, dimethyltin dichloride, dibutyltin diacetate, monomethyltin trichloride and the like. Particularly preferred compounds are tin tetrachloride and alkyltin trichlorides such as MBTC. Descriptions of such tin-coating processes can be found in, e.g., US-A-4,530,857, US-A-4,144,362 and US-A-4,130,673. The process of this invention is useful for removing tin compounds from exhaust gases of such processes. The process may at the same time remove from the exhaust gase substantially all hydrochloric or other acids which may have formed during the coating processs.

Therefore, there may be a process comprising removing the excess tin species and reaction products from the resultant exhaust gases of tin-compound deposition, which process comprises the steps of:

(a) Contacting the glass substrate which is at a temperature between about 350 and about 650 degrees Celsius (°C) with a vapor or a finely divided spray of at least one tin compound capable of forming a layer of tin oxide on the surface of the glass substrate under those conditions;

(b) Contacting the exhaust gases of this process, which gases may contain reaction products or unreacted portions of the tin compounds, with an aqueous acidic (pH less than 6) wash liquid to reduce the tin content of the exhaust gases;

(c) Recirculating the wash liquid until it contains more than about 5 and preferably more than about 10 wt.% of tin metal in the form of the original tin compounds or their reaction or breakdown products; and

(d) Using the wash liquid for recovery of the tin compounds or of tin metal.

In the various embodiments, the glass substrate is a bottle or other glass container, flat glass, tubular glass devices and the like. The tin compound can be tin tetrachloride, MBTC or other glass-treating compound, and may be employed as such or in formulations containing other organic or inorganic ingredients.

The following examples describe and illustrate the effect of the concentration of metal in the scrubbing liquid, and the temperature and relative humidity of the vapor to be scrubbed on the residual concentration of metal species in the vapor at the exit of the scrubber.

## EXAMPLE I

In this example, 7 cubic meters ($m^3$) of dry air at 20° C and one atmosphere was humidified to a predetermined relative humidity at 20° C. Then, 0.7 $m^3$ of this air was heated and laden with 2.66 grams (g.) of MBTC, passed through a glass tube heated at 550 °C, and thereafter recombined with the remaining 6.3 $m^3$ of the air. Using this procedure, approximately 30% of the MBTC used remains behind in the glass tube in the form of tin oxide, and the resulting vapor simulates closely the exhaust gases of the process of coating glass containers with a layer of tin oxide by means of treatment with MBTC vapor.

The vapor was maintained at a preset temperature and passed through a first glass column of 80 millimeters (mm) diameter and 300 mm height, filled with glass rings; a 3% aqueous solution of hydrochloric acid was circulated through the column. After leaving the first column, the vapor passed through a second glass column of 80 mm diameter and 300 mm length, also filled with glass rings. Tap water was circulated through the second column, and solution from this column was used to replenish the liquid in the first column in order to maintain the desired concentration of MBTC in that first column. The tin concentration of the vapor at the exit of the second column was measured. The results in mg of tin metal in standard $m^3$ of vapor are given in the following tables.

Cntrary to expectation, it was found that at least 20 wt.% of tin in the scrubbing liquid can be tolerated, and in fact has a beneficial effect on the efficiency of the scrubbing process. The results also indicate that absorption of the tin compound increases with higher relative humidity and higher inlet temperature ot the gas.

While not intending to be bound by the theory advanced here, a possible explanation may be that the conditions of the examples given herein, contrary to expectations, help to prevent the formation of finely divided mists of the products to be removed. It has been found to be very difficult to remove such mists from vapors by scrubbing or other means known in the art.

The finding that scrubbing with a liquid which already contains a substantial amount of the products to be removed from a vapor helps to resolve a number of serious problems associated with the cleaning of these gases, and is an unexpected and important improvement which makes it unnecessary to employ difficult processes such as washing the gas with a caustic solution and centrifuging or filtering off the resulting precipitates while passing the filtrate through a secondary waste-water cleaning system. Additionally, it is unnecessary to use high-energy scrubbers or electrostatic precipitators, and the volume of the solution generated is considerably reduced, leading to further economies in the treatment of potentially deleterious effluent process streams.

TIN CONCENTRATION AFTER GAS-WASHING

Milligrams of Tin per Cubic Meter

TABLE I

| INLET TEMPERATURE 40°C | | % RELATIVE HUMIDITY @ 20°C | | | |
|---|---|---|---|---|---|
| SCRUBBING LIQUID | | 7 | 50 | 100 | 125 |
| Sn % | DENSITY | | | | |
| 3 | 1.05 | 5 | 7 | 5 | 10 |
| 6 | 1.10 | 20 | 9 | 2 | -- |
| 8 | 1.15 | 1.5 | -- | 2 | -- |
| 11 | 1.20 | 1.5 | -- | 2 | 2 |
| 14 | 1.25 | 1.5 | -- | 2 | 2 |
| 17 | 1.30 | 1.5 | -- | 2 | 2.5 |
| 20 | 1.35 | 2 | -- | -- | 6 |

TABLE II

| INLET TEMPERATURE 50°C | | % RELATIVE HUMIDITY @ 20°C | | | |
|---|---|---|---|---|---|
| SCRUBBING LIQUID | | 7 | 50 | 100 | 125 |
| Sn % | DENSITY | | | | |
| 3 | 1.05 | 6 | 6 | 3.5 | 3.5 |
| 6 | 1.10 | 5 | 4 | 1.5 | 1.5 |
| 8 | 1.15 | 3.5 | 2.5 | -- | 1.5 |
| 11 | 1.20 | 1.5 | 1.5 | -- | 1.5 |
| 14 | 1.25 | 1.5 | -- | 2 | 2 |
| 17 | 1.30 | 1.5 | -- | 2 | 2.5 |
| 20 | 1.35 | 2 | -- | -- | 6 |

TABLE III

| INLET TEMPERATURE 60°C | | % RELATIVE HUMIDITY @ 20°C | | | |
|---|---|---|---|---|---|
| SCRUBBING LIQUID | | 7 | 50 | 100 | 125 |
| Sn % | DENSITY | | | | |
| 3 | 1.05 | 3.5 | -- | -- | 3 |
| 6 | 1.10 | 10 | 4 | -- | 2 |
| 8 | 1.15 | 1.5 | 1.5 | -- | 1.5 |
| 11 | 1.20 | 1.5 | -- | 2 | 2.5 |
| 14 | 1.25 | 1.5 | -- | 1.5 | 1.5 |
| 17 | 1.30 | 2 | -- | 1.5 | -- |
| 20 | 1.35 | 2 | 2 | -- | 4 |

EXAMPLE II

The following example demonstrates the effect of the concentration of MBTC and one of its breakdown products, hydrochloric acid, on the formation of foam on the scrubbing liquid.

Seventy liters per hour of nitrogen, measured at 20°C and one atmosphere, were passed through 20 ml of liquid in a test tube 200 mm long and 24 mm wide, by means of a polytetrafluoroethylene tube of 3 mm internal diameter. The liquid was of the composition given in the tables below. After the foam generated had reached a stable height, it was measured; foam height is reported in mm in the tables.

The results demonstrate that at relatively high concentrations of MBTC, the amount of foaming was reduced to very acceptable levels. Further, a surprisingly beneficial effect of an increased concentration of the breakdown product, hydrochloric acid, appears. The extent of foam formation was also dependent on the nature of the scrubbing water. As can be seen from the results, fairly small amounts of MBTC suffice to generate considerable foam, rendering it impossible to use otherwise unprocessed water in a scrubbing device.

## TABLE IV

### FORMATION OF FOAM IN MILLIMETERS AT VARIOUS CONCENTRATIONS OF HYDROCHLORIC ACID AND MBTC IN TAP WATER (9° German Hardness)

| MBTC Concentration Mol/l. | g/l. | HCl Concentration Mol/l. 0 / g/l. 0 | 0.025 / 0.9 | 0.05 / 1.8 | 0.1 / 3.7 | 0.15 / 5.5 | 0.2 / 7.3 | 0.25 / 9.1 | 0.337 / 12.3 | 0.5 / 18.3 |
|---|---|---|---|---|---|---|---|---|---|---|
| 0 | 0 | 10 | -- | -- | -- | -- | -- | -- | -- | -- |
| 0.018 | 5.1 | -- | -- | -- | -- | -- | -- | -- | -- | -- |
| 0.035 | 9.9 | >140 | -- | -- | -- | -- | -- | -- | -- | -- |
| 0.053 | 15.0 | -- | -- | -- | -- | -- | -- | -- | -- | -- |
| 0.071 | 20.0 | >140 | -- | 75 | -- | -- | 40 | -- | -- | 30 |
| 0.089 | 25.1 | -- | -- | -- | -- | -- | -- | -- | -- | -- |
| 0.133 | 37.5 | >140 | 100 | 75 | -- | 70 | -- | 30 | -- | 20 |
| 0.177 | 49.9 | >140 | -- | 100 | -- | 40 | -- | -- | -- | 20 |
| 0.226 | 63.8 | 30 | -- | -- | -- | -- | -- | -- | -- | 20 |
| 0.354 | 99.9 | 15 | -- | -- | -- | -- | -- | -- | -- | 20 |

## TABLE V

### FORMATION OF FOAM IN MILLIMETERS AT VARIOUS CONCENTRATIONS OF HYDROCHLORIC ACID AND MBTC IN DEMINERALIZED WATER

| MBTC Concentration Mol/l. | g/l. | HCl Concentration Mol/l. 0 / g/l 0 | 0.025 / 0.9 | 0.05 / 1.8 | 0.1 / 3.7 | 0.15 / 5.5 | 0.2 / 7.3 | 0.25 / 9.1 | 0.337 / 12.3 | 0.5 / 18.3 |
|---|---|---|---|---|---|---|---|---|---|---|
| 0 | 0 | 10 | -- | -- | -- | -- | -- | -- | -- | -- |
| 0.018 | 5.1 | 40 | 40 | 40 | 40 | 30 | 30 | 25 | 25 | 25 |
| 0.035 | 9.9 | >140 | 140 | 80 | 70 | 40 | 30 | 25 | 30 | 25 |
| 0.053 | 15.0 | >140 | 100 | 80 | 40 | 35 | -- | -- | -- | 25 |
| 0.071 | 20.0 | 70 | 50 | 50 | 35 | -- | -- | -- | -- | 20 |
| 0.089 | 25.1 | 35 | -- | 30 | -- | -- | -- | -- | -- | 20 |
| 0.133 | 37.5 | 20 | -- | -- | -- | -- | -- | -- | -- | 20 |

The drawing figure illustrates apparatus whereby the process can be conducted. The exhaust duct **102** can be connected to a facility to coat glass or other materials with a layer of tin oxide, or to other installations which generate exhaust gases containing metal species. The apparatus shown is not intended to limit the scope of the invention to this particular embodiment; other ways to practice the process will become apparent to those skilled in the art from a consideration of this teaching.

The exhaust vapor to be cleansed of tin (or other species e.g. titanium) is urged by atmospheric or process pressure from the manufacturing or application unit, not shown, through inlet process line **102** and outlet process line **103** as the result of decreased pressure in line **103** caused by the operation of blower **104**. The gas flow is measured by flow indicator **106** in exit line **107** of blower **104**.

Steam from an external source **108** is fed through line **105** and valve **109** into the circulation pipe **110** of the first scrubber bed **112** to maintain the temperature of the circulating liquid **124** above the dew point of the exhaust gases at all times. In this example, a double scrubber bed **112** and **116** is used, although those skilled in the art will realize that a either a single or multiple installation may also be employed. The arrangement shown enables maintenance of a tin concentration in the first scrubber bed **112** of about 15 wt.%, calculated as tin metal. The concentration of the liquid **124** is kept substantially constant by means of the first specific-mass controller **114** which feeds more dilute liquid **118** from the second scrubber bed **116** through line **113** and valve **111** into the first bed **112**. If the level of the liquid **124** in the first scrubber **112** becomes too high, level controller **120** opens bottom valve **122** to drop some liquid **124** through line **141** into storage tank **142**.

From the first bed **112**, the gases pass through baffle **115** into the second bed **116** which has a separate liquid circuit **126** for recirculation of the medium 118 therewithin to provide adequate contact of the exhaust stream and the treating liquid **118**.

On decrease of the level of liquid **118**, level controller **128** opens water-inlet valve **130** to maintain the appropriate operational liquid level. Optionally, if the tin concentration in second scrubber **116** becomes lower than about 1 wt.%, second specific-mass controller **132** can feed liquid **124** from first scrubber **112** through line **117** and valve **133** into second scrubber **116** in order to maintain the required acidity and to prevent the formation of precipitates and foaming. However, it has surprisingly been discovered that when the exhaust species is MBTC, this added step is unnecessary. In one embodiment of the invention, therefore, line **117** and second specific-mass controller **132** are not used. On startup, some hydrochloric acid is added into both liquid reservoirs; acidity is thereafter maintained by the hydrogen chloride present in the exhaust gases.

Pumps **134** and **136** circulate wash liquid **124** and **118** over the scrubber beds **112** and **116**, which are filled with a suitable packing material such as, e.g., glass helices, porcelain or polymeric saddles or the like. Pump **138** serves to unload storage tank **142** through lines **143** and **144**, controlled by valves **152** and **153**, into a tank truck or other means of transport, or recycle and recovery apparatus, not shown, and forming no part of this invention as such.

In a determination of the utility of the present process, exhaust air was drawn into the unit described hereinabove from glass-coating machinery installed on the downstream end of ten bottle-blowing machines. The exhaust air amounted to 90 $m^3$ of exhaust gas per minute, containing an average of about 130 mg tin per std. $m^3$ (as tin metal), and about 140 mg per SCM of hydrochloric acid calculated as HCl. The inlet temperature of the exhaust gas was between 50 and 75 °C, depending on the conditions in the glass manufacturing plant. Analysis of the effluent in exit line **107** showed that the tin concentration, calculated as tin metal, was at all times below 5 mg per SCM of exhaust gas. The apparatus proreduced 105 kilograms (kg) of a solution containing about 16 kg per day of tin, calculated as tin metal.

Modifications and improvements to the preferred forms of the invention disclosed and described herein may occur to those skilled in the art.

**Claims**

1. A process for treating exhaust gases containing tin compound(s), to remove the tin compound(s), characterised by contacting the exhaust gases with an aqueous acidic liquid absorbing medium having a pH of about 6 or less to absorb tin compound(s) from the exhaust gases until the absorbing medium contains at least about 5wt% tin.

2. A process according to claim 1 in which the absorbing medium is maintained substantially free of precipitate.

3. A process according to claim 1 or claim 2 in which the pH of the absorbing medium is less than about 3.

4. A process according to claim 3 in which the pH of the absorbing medium is less than about 2.

5. A process according to any one of the preceding claims in which the absorbing medium already contains some of a tin compound which is to be absorbed, or which is substantially similar to such compound, before contact of the exhaust gases therewith, because of recirculation of the absorbing medium in the process and/or incorporating said tin compound before using the absorbing medium.

6. A process according to any one of the preceding claims in which the contacting proceeds until the absorbing medium contains at least about 10wt% tin.

7. A process according to claim 6 in which the contacting proceeds until the absorbing medium contains at least about 20wt% tin.

8. A process according to any one of the preceding claims in which the exhaust gases are contacted with the absorbing medium in a low-energy scrubber.

9. A process according to any one of the preceding claims in which the exhaust gases are contacted with the absorbing medium substantially without saturating the exhaust gases with the tin compound(s), and without forming a mist.

10. A process according to any one of the preceding claims, further comprising recovering accumulated tin from the used absorbing medium as tin or as tin compound(s).

11. A process according to any one of the preceding claims in which the content of tin in the exhaust gases is reduced to about 5 mg per std. $m^3$ or less.

12. A process according to any one of the preceding claims in which the tin compound(s) comprise(s) tin tetrachloride or alkyltin halide.

13. A process according to claim 12 in which the tin compound(s) comprise(s) monobutyltin chloride.

14. A process according to any one of the preceding claims in which the used, tin-containing absorbing medium is thereafter removed from the process and stored.

15. A process according to any one of the preceding claims in which used absorbing medium is removed from time to time and replaced with water or with more dilute such medium.

16. A process according to any one of the preceding claims in which the exhaust gases are contacted with the absorbing medium in two or more stages.

17. A coating process in which hot glass articles are treated with gas containing tin halide or organotin halide, to coat the articles, and in which exhaust gases from the process are treated to remove unused tin halide or organotin halide therefrom by a process according to any one of claims 1 to 16.

18. A coating process according to claim 17 in which the exhaust gas treatment is in accordance with claim 10, and in which tin or tin compound(s) recovered from the used absorbing medium is/are recycled as tin halide or organotin halide for the treatment of the hot glass articles.

**Patentansprüche**

1. Verfahren zur Behandlung von Zinnverbindung(en) enthaltenden Abgasen, um die Zinnverbindung(en) zu entfernen, dadurch **gekennzeichnet,** daß man die Abgase mit einem wäßrigen, sauren, flüssigen, absorbierenden Medium, das einen pH von etwa 6 oder weniger aufweist, in Kontakt bringt, um die Zinnverbindung(en) aus den Abgasen zu absorbieren, bis das absorbierende Medium mindestens etwa 5 Gew.-% Zinn enthält.

9

**2.** Verfahren nach Anspruch 1, dadurch **gekennzeichnet,** daß das absorbierende Medium im wesentlichen frei von Niederschlag gehalten wird.

**3.** Verfahren nach Anspruch 1 oder 2, dadurch **gekennzeichnet,** daß der pH-Wert des absorbierenden Mediums kleiner als etwa 3 ist.

**4.** Verfahren nach Anspruch 3, dadurch **gekennzeichnet,** daß der pH-Wert des absorbierenden Mediums kleiner als etwa 2 ist.

**5.** Verfahren nach einem der vorstehenden Ansprüche, dadurch **gekennzeichnet,** daß das absorbierende Medium bereits etwas von einer Zinnverbindung, die absorbiert werden soll oder die im wesentlichen dieser Verbindung gleicht, enthält, bevor es in Kontakt mit den Abgasen kommt, da bei dem Verfahren das absorbierende Medium im Kreislauf geführt wird und/oder die genannte Zinnverbindung vor der Verwendung des absorbierenden Mediums eingebracht wird.

**6.** Verfahren nach einem der vorstehenden Ansprüche, dadurch **gekennzeichnet,** daß das Inkontaktbringen fortgesetzt wird, bis das absorbierende Medium mindestens etwa 10 Gew.-% Zinn enthält.

**7.** Verfahren nach Anspruch 6, dadurch **gekennzeichnet,** daß das Inkontaktbringen fortgesetzt wird, bis das absorbierende Medium mindestens etwa 20 Gew.-% Zinn enthält.

**8.** Verfahren nach einem der vorstehenden Ansprüche, dadurch **gekennzeichnet,** daß die Abgase mit dem absorbierenden Medium in einem Niedrigenergie-Wäscher in Kontakt gebracht werden.

**9.** Verfahren nach einem der vorstehenden Ansprüche, dadurch **gekennzeichnet,** daß die Abgase mit dem absorbierenden Medium im wesentlichen ohne Sättigung der Abgase mit der (den) Zinnverbindung(en) und ohne Nebelbildung in Kontakt gebracht werden.

**10.** Verfahren nach einem der vorstehenden Ansprüche, weiterhin dadurch **gekennzeichnet,** daß man akkumuliertes Zinn aus dem verwendeten absorbierenden Medium als Zinn oder als Zinnverbindung(en) zurückgewinnt.

**11.** Verfahren nach einem der vorstehenden Ansprüche, dadurch **gekennzeichnet,** daß der Zinngehalt in den Abgasen auf etwa 5 mg pro Std. $m^3$ oder weniger verringert wird.

**12.** Verfahren nach einem der vorstehenden Ansprüche, dadurch **gekennzeichnet,** daß die Zinnverbindung(en) Zinntetrachlorid oder ein Alkylzinnhalogenid umfaßt (umfassen).

**13.** Verfahren nach Anspruch 12, dadurch **gekennzeichnet,** daß die Zinnverbindung(en) Monobutylzinnchlorid umfaßt (umfassen).

**14.** Verfahren nach einem der vorstehenden Ansprüche, dadurch **gekennzeichnet,** daß das gebrauchte zinnhaltige absorbierende Medium anschließend aus dem Prozeß entfernt und gelagert wird.

**15.** Verfahren nach einem der vorstehenden Ansprüche, dadurch **gekennzeichnet,** daß gebrauchtes absorbierendes Medium von Zeit zu Zeit entfernt und durch Wasser oder ein solches stärker verdünntes Medium ersetzt wird.

**16.** Verfahren nach einem der vorstehenden Ansprüche, dadurch **gekennzeichnet,** daß die Abgase mit dem absorbierenden Medium in zwei oder mehr Stufen in Kontakt gebracht werden.

**17.** Beschichtungsverfahren, bei dem heiße Glasgegenstände mit Zinnhalogenid oder Organozinnhalogenid enthaltendem Gas behandelt werden, um die Gegenstände zu beschichten, wobei die Abgase des Verfahrens behandelt werden, um nicht verbrauchtes Zinnhalogenid oder Organozinnhalogenid durch ein Verfahren nach einem der Ansprüche 1 bis 16 daraus zu entfernen.

**18.** Beschichtungsverfahren nach Anspruch 17, dadurch **gekennzeichnet,** daß die Abgasbehandlung gemäß Anspruch 10 erfolgt, wobei aus dem verwendeten absorbierenden Medium wiedergewonnene(s) Zinn oder Zinnverbindung(en) als Zinnhalogenid oder Organozinnhalogenid für die Behandlung der heißen Glasgegenstände recycelt wird (werden).

**Revendications**

1. Procédé de traitement de gaz d'échappement contenant un ou plusieurs composés d'étain, pour éliminer le composé ou les composés d'étain, caractérisé par la mise en contact des gaz d'échappement avec un milieu absorbant liquide acide aqueux ayant un pH d'environ 6 ou moins pour absorber le ou les composés d'étain des gaz d'échappement jusqu'à ce que le milieu absorbant contienne au moins environ 5 % en poids d'étain.

2. Procédé suivant la revendication 1, dans lequel le milieu absorbant est maintenu sensiblement dépourvu de précipité.

3. Procédé suivant la revendication 1 ou la revendication 2, dans lequel le pH du milieu absorbant est inférieur à environ 3.

4. Procédé suivant la revendication 3, dans lequel le pH du milieu absorbant est inférieur à environ 2.

5. Procédé suivant l'une quelconque des revendications précédentes, dans lequel le milieu absorbant contient déjà un peu d'un composé d'étain qui doit être absorbé, ou qui est sensiblement semblable à ce composé, avant le contact des gaz d'échappement avec lui, à cause du recyclage du milieu absorbant dans le procédé et/ou de l'incorporation du composé d'étain en question avant l'utilisation du milieu absorbant.

6. Procédé suivant l'une quelconque des revendications précédentes, dans lequel la mise en contact a lieu jusqu'à ce que le milieu absorbant contienne au moins environ 10 % en poids d'étain.

7. Procédé suivant la revendication 6, dans lequel la mise en contact a lieu jusqu'à ce que le milieu absorbant contienne au moins environ 20 % en poids d'étain.

8. Procédé suivant l'une quelconque des revendications précédentes, dans lequel les gaz d'échappement sont mis en contact avec le milieu absorbant dans un épurateur à faible énergie.

9. Procédé suivant l'une quelconque des revendications précédentes, dans lequel les gaz d'échappement sont mis en contact avec le milieu absorbant, principalement sans que les gaz d'échappement soient saturés du ou des composés d'étain et sans formation d'un brouillard.

10. Procédé suivant l'une quelconque des revendications précédentes, comprenant en outre la récupération de l'étain accumulé du milieu absorbant utilisé sous forme d'étain ou sous forme d'un ou plusieurs composés d'étain.

11. Procédé suivant l'une quelconque des revendications précédentes, dans lequel la teneur en étain des gaz d'échappement est réduite à environ 5 mg ou moins par mètre cube mesuré dans des conditions normales.

12. Procédé suivant l'une quelconque des revendications précédentes, dans lequel le composé ou les composés d'étain ont ou comprennent du tétrachlorure d'étain ou un halogénure d'alkylétain.

13. Procédé suivant la revendication 12, dans lequel le composé ou les composés d'étain comprend ou comprennent du chlorure de monobutylétain.

14. Procédé suivant l'une quelconque des revendications précédentes, dans lequel le milieu absorbant utilisé contenant de l'étain est ensuite retiré du procédé et stocké.

15. Procédé suivant l'une quelconque des revendications précédentes, dans lequel le milieu absorbant utilisé est retiré périodiquement et remplacé par de l'eau ou par ce milieu plus dilué.

**16.** Procédé suivant l'une quelconque des revendications précédentes, dans lequel les gaz d'échappement sont mis en contact avec le milieu absorbant en deux ou plus de deux étages.

**17.** Procédé de revêtement, dans lequel des articles de verre chauds sont traités, en vue de leur revêtement, avec un gaz contenant un halogénure d'étain ou un halogénure organique d'étain, et dans lequel les gaz d'échappement issus du procédé sont traités par un procédé suivant l'une quelconque des revendications 1 à 16 afin d'en éliminer l'halogénure d'étain ou l'halogénure organique d'étain non utilisé.

**18.** Procédé de revêtement suivant la revendication 17, dans lequel le traitement des gaz d'échappement est effectué conformément à la revendication 10 et dans lequel le ou les composés d'étain récupérés du milieu absorbant utilisé est ou sont recyclés comme halogénure d'étain ou halogénure organique d'étain pour le traitement des articles de verre chauds.